# EUROPÄISCHE PATENTSCHRIFT

(11) **EP 1 980 871 B1**
(45) Veröffentlichungstag und Bekanntmachung des Hinweises auf die Patenterteilung: **17.06.2009**
(21) Anmeldenummer: 08004202.1
(22) Anmeldetag: 06.03.2008
(51) Int. Cl.: G01S 7/497, G01S 17/42

(54) **Prüfverfahren zur Prüfung der Funktionsfähigkeit eines Überwachungssensors, Überwachungsverfahren und Überwachungssensor**
Test procedure for testing the functionality of a monitoring sensor, monitoring method and monitoring sensor
Dispositif de vérification de la capacité fonctionnelle d'un capteur de surveillance, procédé de surveillance et capteur de surveillance

(30) Priorität: 13.04.2007 DE 102007017522
(43) Veröffentlichungstag der Anmeldung: 15.10.2008
(73) Patentinhaber: SICK AG, 79183 Waldkirch/Breisgau (DE)
(72) Erfinder: Schneider, Walter, 79312 Emmendingen (DE); Görnemann, Otto, 41564 Kaarst (DE)
(74) Vertreter: Manitz, Finsterwald & Partner GbR

(56) Entgegenhaltungen:
- DE-A1- 3 700 009
- DE-A1- 4 340 756
- DE-C1- 3 908 273
- US-A- 4 823 901

## Beschreibung

Die Erfindung betrifft ein Prüfverfahren zur Prüfung der Funktionsfähigkeit eines Überwachungssensors, der zur Überwachung eines Schutzfeldes vorgesehen ist und ein wenigstens zweidimensionales zu überwachendes Schutzfeld mit wenigstens einem Scanner abtastet, wobei Licht einer Lichtquelle über eine Lichtablenkeinheit in ein zu überwachendes Schutzfeld gesendet wird und Licht, das gegebenenfalls von einem im Schutzfeld vorhandenen Objekt reflektiert oder remittiert wird, mit einem Empfänger detektiert wird. Die Erfindung betrifft weiterhin ein entsprechendes Überwachungsverfahren und einen entsprechenden Überwachungssensor.

Zur Überwachung von Schutzfeldern werden häufig Laserscanner eingesetzt. Ein von einem Laser erzeugter Lichtstrahl wird über eine Lichtablenkeinheit in einen Schutzbereich gelenkt und dort von einem gegebenenfalls vorhandenen Objekt reflektiert oder remittiert. Das reflektierte bzw. remittierte Licht gelangt wieder zurück zu der Laserscaneinheit und wird dort von einem Empfänger detektiert. Die Lichtablenkeinheit ist in der Regel schwenkbar bzw. drehbar ausgestaltet, so dass der von dem Laser erzeugte Lichtstrahl ein durch die Schwenkbewegung erzeugtes Schutzfeld überstreicht. Wird ein vom Empfänger empfangenes reflektiertes Lichtsignal aus dem Schutzbereich empfangen, so kann aus der Winkelstellung der Ablenkeinheit auf die Winkellage des Objektes im Schutzbereich geschlossen werden.

Wird zusätzlich zum Beispiel die Laufzeit von zum Beispiel pulsförmigem Laserlicht überwacht, kann aus der Laufzeit unter Verwendung der Lichtgeschwindigkeit auch auf die Entfernung des Objektes vom Laserscanner geschlossen werden. Auf diese Weise lassen sich zum Beispiel zweidimensionale Schutzfelder vollständig überwachen.

Befindet sich im Schutzfeld ein unzulässiges Objekt, so kann von der Empfängereinheit ein entsprechendes Warn- oder Steuersignal ausgegeben werden.

Derartige Systeme werden zum Beispiel bei fahrerlosen Transportsystemen eingesetzt, um Kollisionen zu vermeiden. Andere Anwendungen betreffen zum Beispiel Maschinen, bei denen ein Gefahrenbereich überwacht werden muss, der beim Betrieb der Maschine von einer Bedienperson nicht verletzt werden darf. Es kann sich dabei zum Beispiel um einen Roboterarbeitsbereich handeln. Wird mit Hilfe des Laserscanners die Anwesenheit eines unzulässigen Objektes - also zum Beispiel ein Bein einer Bedienperson - im Gefahrenbereich festgestellt, wird ein Nothalt der Maschine bewirkt.

Beispielhaft wird auf die Offenlegungsschrift DE 43 40 756 A1 verwiesen, in der eine Laserscanvorrichtung mit einer Lichtablenkvorrichtung beschrieben ist, mit der ein zweidimensionales Schutzfeld überwacht werden kann. Bei diesem Stand der Technik wird die Abstandsinformation aus der Messung der Impulslaufzeit eines in den Schutzbereich gesendeten Lichtpulses bestimmt.

Werden derartige Scansysteme als Sicherheitssysteme eingesetzt, müssen hohe Sicherheitsanforderungen erfüllt werden. DE 39 08 273 C1 beschreibt eine Selbsttesteinrichtung für einen scannenden Lichttaster, bei dem ein im Wesentlichen halbkreisförmiger Schutzbereich Lichtquellen, Lichtabsorber und Reflektoren enthält, die in bekannter Lage angeordnet sind. Während des Scanvorganges wird geprüft, ob an den erwarteten Stellen von den Lichtquellen ein Lichtsignal auf den Empfänger trifft, ob von den Reflektoren ein von dem Lasersystem ausgesendeter Lichtstrahl reflektiert wird und ob an den Positionen der Absorber kein Signal empfangen wird. Abweichungen von diesem erwarteten Verlauf deuten auf einen Fehler des Systems hin. Wird das System zum Beispiel bei der Steuerung eines Fahrzeuges eingesetzt, so kann in diesem Fall ein Nothalt ausgelöst werden.

Aufgabe der vorliegenden Erfindung ist es, ein Prüfverfahren zur Prüfung der Funktionsfähigkeit eines Überwachungssensors und ein Überwachungsverfahren zur Überwachung eines Schutzfeldes anzugeben, die einfach durchzuführen sind und kostengünstig realisiert werden können. Diese Aufgabe wird mit einem Prüfverfahren mit den Merkmalen des Anspruches 1 bzw. ein Überwachungsverfahren mit den Merkmalen des Anspruches 11 gelöst. Anspruch 14 ist auf einen Überwachungssensor zur Durchführung der erfindungsgemäßen Verfahren gerichtet. Unteransprüche sind auf vorteilhafte Ausgestaltungen gerichtet.

Bei dem erfindungsgemäßen Prüfverfahren wird wenigstens ein Konturtestobjekt außerhalb des zu überwachenden Schutzfeldes bereitgestellt, das sich jedoch dennoch im Erfassungsbereich des Sensors befindet. Die Lage des Konturtestobjektes ist zumindest in einer räumlichen Dimension bekannt. Zum Beispiel bei einem Scanner, bei dem der Laserlichtstrahl mit Hilfe einer schwenkbaren Lichtablenkeinheit über das Schutzfeld bewegt wird, ist also zum Beispiel zumindest der Winkelbereich des wenigstens einen Konturtestobjektes bekannt.

Außerdem wird wenigstens ein Feldtestobjekt außerhalb des zu überwachenden Schutzfeldes aber im Erfassungsbereich des Sensors vorgesehen. Besonders sicher ist eine Ausgestaltung, bei der die Lage des wenigstens einen Konturtestobjekts vollständig bekannt ist, also zum Beispiel sowohl der Winkel als auch der Abstand relativ zu einem schwenkbaren Laserscansystem.

Erfindungsgemäß wird ein erster Feldsatz mit wenigstens zwei Scanfeldern definiert. Dabei umfasst das erste Scanfeld dieses ersten Feldsatzes das vollständige zu überwachende Schutzfeld und den Bereich wenigstens eines Konturtestobjektes und das zweite Scanfeld des ersten Feldsatzes umfasst wenigstens den Bereich eines Feldtestobjektes.

Bei der Durchführung einer ersten Prüfsequenz werden das zu überwachende Schutzfeld und die Bereiche des Konturtestobjektes und des Feldtestobjektes wenigstens einmal unter Verwendung dieses ersten Feldsatzes abgetastet. Ein positives erstes Ausgangssignal wird nur dann erzeugt, wenn das Konturtestobjekt im ersten Scanfeld dieses ersten Feldsatzes, das unter anderem das gesamte zu überwachende Schutzfeld umfasst, in der erwarteten Lage (gegebenenfalls unter Berücksichtigung eines Toleranzbereiches) detektiert wird. Ein negatives zweites Ausgangssignal wird erzeugt, wenn das Feldtestobjekt im zweiten Scanfeld des ersten Feldsatzes detektiert wird. Bei ordnungsgemäßer Funktion und freiem Schutzfeld ergibt die erste Prüfsequenz also ein positives erstes Ausgangssignal und ein negatives zweites Ausgangssignal.

Außerdem wird ein zweiter Feldsatz mit wenigstens zwei Scanfeldern definiert, wobei das erste Scanfeld des zweiten Feldsatzes wenigstens den Bereich des Feldtestobjektes und das zweite Scanfeld des zweiten Feldsatzes vollständig das zu überwachende Schutzfeld und den Bereich wenigstens eines Konturtestobjektes umfasst. Bei Verwendung von genau zwei Feldsätzen ist die Definition der Scanfelder des zweiten Feldsatzes also umgekehrt im Vergleich zu der Definition der Scanfelder des ersten Feldsatzes.

In einer zweiten Prüfsequenz werden das zu überwachende Schutzfeld und die Bereiche des Konturtestobjektes und des Feldtestobjektes unter Verwendung des zweiten Feldsatzes wenigstens einmal abgetastet. Wird im zweiten Scanfeld des zweiten Feldsatzes, das im zweiten Feldsatz unter anderem das gesamte zu überwachende Schutzfeld umfasst, das Konturtestobjekt in der erwarteten Lage (gegebenenfalls unter Berücksichtigung eines Toleranzbereiches) detektiert, so wird ein positives zweites Ausgangssignal erzeugt. Wird das Feldtestobjekt im ersten Scanfeld des zweiten Feldsatzes detektiert, so wird ein negatives erstes Ausgangssignal erzeugt.

Erläuternd wird erwähnt, dass im vorliegenden Text als erstes Ausgangssignal jeweils das Ausgangssignal, das zum jeweils ersten Scanfeld einer Prüfsequenz gehört, und als zweites Ausgangssignal jeweils das Ausgangssignal, das zum jeweils zweiten Scanfeld gehört, bezeichnet werden.

Die korrekte Funktionsfähigkeit des Sensors wird angenommen, wenn nach einem Wechsel auf die erste Prüfsequenz ein positives erstes Ausgangssignal und ein negatives zweites Ausgangssignal festgestellt werden bzw. nach einem Wechsel auf die zweite Prüfsequenz ein positives zweites Ausgangssignal und ein negatives erstes Ausgangssignal festgestellt werden. Dabei sind auch Verfahrensführungen umfasst, bei denen nach dem Wechsel des Feldsatzes zunächst ein etwa dem Schaltspiel entsprechender Zeitraum von zum Beispiel einigen einhundert Millisekunden abgewartet wird, bevor die neue Belegung der Ausgangssignale überprüft bzw. verwendet wird.

In jedem der Feldsätze wird also zum einen die Anwesenheit eines Konturtestobjektes in der erwarteten Lage überprüft, wobei in einer ersten Prüfsequenz das erste Ausgangssignal und in einer zweiten Prüfsequenz das zweite Ausgangssignal relevant sind. Das jeweils andere Ausgangssignal ist durch die Detektion eines Feldtestobjektes jeweils auf negativ gestellt.

Die Empfangssignale des Empfängers werden also bei der Bestimmung des ersten und des zweiten Ausgangssignals der unterschiedlichen Feldsätze unterschiedlich bewertet.

Durch das Wechseln von einer Prüfsequenz auf eine andere Prüfsequenz wird auch die Zuverlässigkeit der Ausgangssignale des Scanners überprüft.

Befindet sich bereits während einer Prüfsequenz ein unzulässiges Objekt im Schutzfeld, so wird dasjenige Scanfeld, das das Schutzfeld umfasst, verletzt. Das entsprechende zu diesem Scanfeld gehörende Ausgangssignal ist nicht wie erwartet positiv sondern negativ, so dass auf jeden Fall ein Fehler angenommen und ein Warn- oder Stoppsignal erzeugt wird.

Grundsätzlich ist eine genaue Kenntnis der Lage des außerhalb des Schutzfeldes liegenden Feldtestobjektes nicht zwingend notwendig, solange es dazu dient, das entsprechende Ausgangssignal (das zweite während einer ersten Prüfsequenz, bzw. das erste während einer zweiten Prüfsequenz) durch seine Detektion auf "negativ" zu setzen. Es muss nur sichergestellt sein, dass das entsprechende Scanfeld des jeweiligen Feldsatzes (das zweite Scanfeld des ersten Feldsatzes bzw. das erste Scanfeld des zweiten Feldsatzes) das Feldtestobjekt umfasst. Die zusätzliche Kenntnis der Lage des Feldtestobjektes erhöht andererseits die Betriebssicherheit des Prüfverfahrens.

Bei einer einfachen Ausgestaltung des Verfahrens bedeutet ein positives Ausgangssignal, dass der entsprechende Ausgang beziehungsweise Ausgangskanal des Laserscansystems aktiv ist, während ein negatives Ausgangssignal durch einen deaktivierten entsprechenden Ausgang bzw. Ausgangskanal des Laserscansystems realisiert ist.

Bei einer solchen Ausgestaltung lässt sich auf einfache Weise realisieren, dass das auf positiv gesetzte Ausgangssignal als Sensorsignal dient.

Zur kontinuierlichen Überprüfung der Funktionsfähigkeit wird vorteilhafterweise während eines Überwachungsvorganges mehrmals zwischen unterschiedlichen Feldsätzen gewechselt.

Besonders praktikabel ist eine Wechselperiode von 1 bis 10 Sekunden, vorzugsweise von 3 bis 7 Sekunden. Ganz besonders bevorzugt wird etwa alle 5 Sekunden gewechselt. Eine entsprechende Auswahl der Periode gewährleistet einen praktikablen Kompromiss zwischen den Sicherheitsanforderungen einerseits, die eine möglichst kurze Umschaltperiode erfordern, und einer einfachen Auswertung, die nicht zu kurze Umschaltperioden bedeutet.

Wurde während einer Prüfsequenz das ordnungsgemäße Funktionieren festgestellt, so wird der entsprechende Feldsatz für einen gewissen Zeitraum, zum Beispiel für einige Sekunden (zum Beispiel 5 Sekunden), beibehalten, bevor auf den anderen Feldsatz umgeschaltet wird. Dann wird die zweite Prüfsequenz durchgeführt und bei ordnungsgemäßem Verlauf der zweite Feldsatz für einige Sekunden, zum Beispiel wiederum 5 Sekunden, beibehalten.

Besonders günstig ist es, wenn die Wechselperiode frei einstellbar ist, so dass sie an die Anforderungen und Gegebenheiten des zu überwachenden Szenarios angepasst werden kann.

Eine einfache Ausgestaltung sieht vor, dass die Ausgangssignale einer Prüfsequenz, also das erste und das zweite Ausgangssignal, jeweils aus den Signalen des Empfängers während desselben Scans des zu überwachenden Schutzfeldes bestimmt werden. Dazu wird aus den Rohdaten des Empfangssignals während des Scanvorgangs extrahiert, welche Daten zu dem jeweils ersten Scanfeld und welche Daten zu dem jeweils zweiten Scanfeld gehören.

Alternativ kann das jeweils erste Ausgangssignal einer Prüfsequenz während eines ersten Scans des zu überwachenden Schutzfeldes und das jeweils zweite Ausgangssignal der Prüfsequenz in einem zweiten Scan des zu überwachenden Schutzfeldes ermittelt werden.

Das außerhalb des Schutzfeldes befindliche Konturtestobjekt und das außerhalb des Schutzfeldes befindliche Feldtestobjekt können zwei unterschiedliche Objekte zum Beispiel in unterschiedlichen Winkellagen des Scanners sein. Eine einfache Ausgestaltung sieht vor, dass als Konturtestobjekt und als Feldtestobjekt ein und dasselbe Testobjekt verwendet wird.

Um den Einfluss von äußeren kurzzeitigen Störsignalen zu verringern, wird vorteilhafterweise jeweils eine Vielzahl von aufeinander folgenden Scans ohne Wechsel des Feldsatzes durchgeführt, bevor aus den resultierenden Ausgangssignalen ein Gesamtsignal erzeugt wird.

Bei einer Ausgestaltung ist vorgesehen, dass ein korrektes Funktionieren nur dann angenommen wird, wenn sich ein Wechsel von einem ersten auf einen zweiten Feldsatz in den Ausgangssignalen binnen eines Zeitraums widerspiegelt, der kürzer als ein vorgegebener Schwellwert, zum Beispiel einige einhundert Millisekunden (zum Beispiel 400 Millisekunden), ist. Eine solche Ausgestaltung ermöglicht eine gewisse Toleranz gegenüber einem möglicherweise vorhandenen Schaltspiel. Der Schwellwert wird zum Beispiel anhand der geforderten Sicherheitsanforderungen bestimmt. Andererseits kann zum Beispiel bei einem fahrerlosen Transportsystem aus dem Schwellwert in Verbindung mit der Maximalgeschwindigkeit des Transportsystems ein einzuhaltender Sicherheitsabstand festgelegt werden.

Die Erfindung betrifft weiterhin ein Überwachungsverfahren zur Überwachung eines Schutzfeldes mit einem Überwachungssensor, bei dem erfindungsgemäß zur Prüfung der Funktionsfähigkeit des Sensors das erfindungsgemäße Prüfverfahren verwendet wird. Während der ersten Prüfsequenz und während des darauf folgenden Zeitraumes bis zum Wechsel auf einen anderen Feldsatz wird das erste Ausgangssignal als Sensorausgangssignal verwendet und während der zweiten Prüfsequenz und während des darauf folgenden Zeitraumes bis zum Wechsel auf einen anderen Feldsatz wird das zweite Ausgangssignal als Sensorausgangssignal verwendet.

Während der ersten Prüfsequenz umfasst das erste Scanfeld das zu überwachenden Schutzfeld und gewährleistet dessen vollständige Überwachung. Während der zweiten Prüfsequenz umfasst andererseits das zweite Scanfeld das gesamte zu überwachenden Schutzfeld, so dass über dieses Scanfeld die vollständige Überwachung des Schutzfeldes gewährleistet ist.

Sowohl während der ersten als auch während der zweiten Prüfsequenz und der jeweils nachfolgenden Zeiträume ist also zu jeder Zeit eine vollständige Überwachung des zu überwachenden Schutzfeldes gewährleistet. Durch den Wechsel der Feldsätze liegt das eigentliche Überwachungssignal einmal als erstes Ausgangssignal und einmal als zweites Ausgangssignal vor, so dass die Ausgänge des Scanners gewechselt werden und somit gegeneinander geprüft werden können.

Während eines Überwachungszeitraumes wird vorteilhafterweise mehrfach zwischen den Feldsätzen gewechselt. Jeder Wechsel entspricht einer Prüfsequenz, die Information über die korrekte Funktionsfähigkeit des Überwachungssensors liefert. Ein solcher Wechsel kann zum Beispiel jeweils nach einem Zeitraum erfolgen, der zwischen 1 bis 10 Sekunden, vorteilhafterweise 3 bis 7 Sekunden, besonders vorteilhaft etwa 5 Sekunden, beträgt.

In den Zeiträumen zwischen den Prüfsequenzen kann das jeweils positive, also insbesondere das jeweils aktive, Ausgangssignal als Sensorsignal verwendet werden.

Bei anderen Ausgestaltungen kann vorgesehen sein, dass der gesamte Überwachungszeitraum durch mehrere direkt aufeinander folgende unterschiedliche Prüfsequenzen gebildet wird.

Die erfindungsgemäßen Verfahren verwenden wenigstens zwei Feldsätze bzw. wenigstens zwei Prüfsequenzen. Verfahren unter Verwendung von einer größeren Anzahl Feldsätze und einer entsprechend größeren Anzahl von Prüfsequenzen sind ebenfalls umfasst. Die Verwendung von zwei Feldsätzen ist jedoch besonders einfach in der Anwendung.

Bei den erfindungsgemäßen Verfahren verwenden die einzelnen Feldsätze jeweils wenigstens zwei Scanfelder und eine entsprechende Anzahl Ausgangssignale. Verfahren, bei denen einer oder mehrere Feldsätze eine größere Anzahl Scanfelder verwenden, sind ebenfalls umfasst. Die Verwendung von jeweils zwei Scanfeldern ist jedoch besonders einfach in der Auswertung.

Die erfindungsgemäßen Verfahren sind nicht auf die Verwendung von nur einem Konturtestobjekt und nur einem Feldtestobjekt beschränkt.

Die Erfindung betrifft weiterhin einen Überwachungssensor zur Durchführung eines erfindungsgemäßen Prüfungsverfahrens und/oder eines erfindungsgemäßen Überwachungsverfahrens. Der Überwachungssensor weist wenigstens einen Scanner mit einer Lichtquelle, vorzugsweise einem Laser, eine Lichtablenkeinheit zur Ablenkung des Lichtes der Lichtquelle in ein zu überwachendes Schutzfeld und einen Empfänger zur Detektion von Licht, das gegebenenfalls von einem im Schutzfeld vorhandenen Objekt reflektiert oder remittiert wird, auf. Weiterhin ist eine Speichereinheit vorgesehen, in der Scanfelder wenigstens zweier unterschiedlicher Feldsätze abgespeichert sind. Der erfindungsgemäße Überwachungssensor weist wenigstens ein Testobjekt außerhalb des zu überwachenden Schutzfeldes auf, wobei die Lage des wenigstens einen Testobjektes bekannt und gegebenenfalls auch in der Speichereinheit abgespeichert ist. Eine Auswerte- und Steuereinheit ist derart ausgestaltet, den Scanner derart anzusteuern, dass er das zu überwachende Schutzfeld und den Bereich des wenigstens einen Testobjektes während einer ersten Prüfsequenz gemäß einem ersten Feldsatz und während einer zweiten Prüfsequenz gemäß einem zweiten Feldsatz abscannt.

Der erfindungsgemäße Überwachungssensor ermöglicht die Durchführung eines erfindungsgemäßen Prüfverfahrens bzw. eines erfindungsgemäßen Überwachungsverfahrens. Dazu sind in der Speichereinheit Feldsätze abgelegt, die die oben beschriebenen Eigenschaften aufweisen.

Die Vorteile des erfindungsgemäßen Überwachungssensors, besondere Ausführungsformen und deren Vorteile ergeben sich in analoger Weise aus den oben geschilderten Ausgestaltungen und Vorteilen der erfindungsgemäßen Verfahren.

Die erfindungsgemäßen Verfahren und der erfindungsgemäße Sensor können vorteilhaft und unter Erfüllung hoher Sicherheitsanforderungen zum Beispiel zur Absicherung von Maschinen, zur Steuerung von Fahrzeugen, insbesondere fahrerlosen Fahrzeugen, zur Steuerung von Türen oder Toren, etc. eingesetzt werden.

Die erfindungsgemäßen Verfahren und der erfindungsgemäße Sensor eignen sich insbesondere zur Anwendung bei Systemen, die im Außenbereich eingesetzt werden. Zum Beispiel aufgrund von Witterungseinflüssen kann es hier häufiger zu Fehlfunktionen oder Fehldetektionen kommen, die eine sichere Überprüfung der Funktionsfähigkeit des Sensors erfordern.

Die Erfindung wird anhand der beiliegenden schematischen Figuren im Detail erläutert. Dabei zeigen
- Fig. 1: eine erste Ausführungsform mit zwei Testobjekten während eines ersten Betriebszustandes,
- Fig. 2: eine erste Ausführungsform mit zwei Testobjekten während eines zweiten Betriebszustandes,
- Fig. 3: eine zweite Ausführungsform mit einem Testobjekt während eines ersten Betriebszustandes und
- Fig. 4: eine zweite Ausführungsform mit einem Testobjekt während eines zweiten Betriebszustandes.

Der im Folgenden beschriebene Überwachungssensor kann zum Beispiel zur Überwachung des Schutzfeldes eines Roboters oder einer Maschine dienen. Zum Beispiel kann als Schutzfeld der Gefahrenbereich eines Krans überwacht werden, in dessen Gefahrenbereich während des Betriebes keine Bedienperson eindringen darf. Befindet sich ein unzulässiges Objekt, zum Beispiel das Bein einer Bedienperson, in dem Gefahrenbereich, so wird dies von dem beschriebenen Sensor detektiert und ein Warnsignal ausgegeben und/oder die Gefahr bringende Bewegung gestoppt.

Andere Anwendungen des im Folgenden beschriebenen Sensors betreffen zum Beispiel Transportsysteme, insbesondere fahrerlose Transportsysteme, wobei hier der Bereich vor dem Transportsystem überwacht wird, um Kollisionen zu vermeiden. Wird ein Objekt in dem Schutzfeld vor dem Transportsystem detektiert, so wird ein Stoppsignal ausgelöst, um das Transportsystem anzuhalten.

Der Begriff des "unzulässigen Objektes" wird im vorliegenden Text für unzulässige bzw. störende Objekte im Schutzfeld verwendet. Insbesondere können damit zum Beispiel auch gefährdete Körperteile von Bedienpersonen gemeint sein.

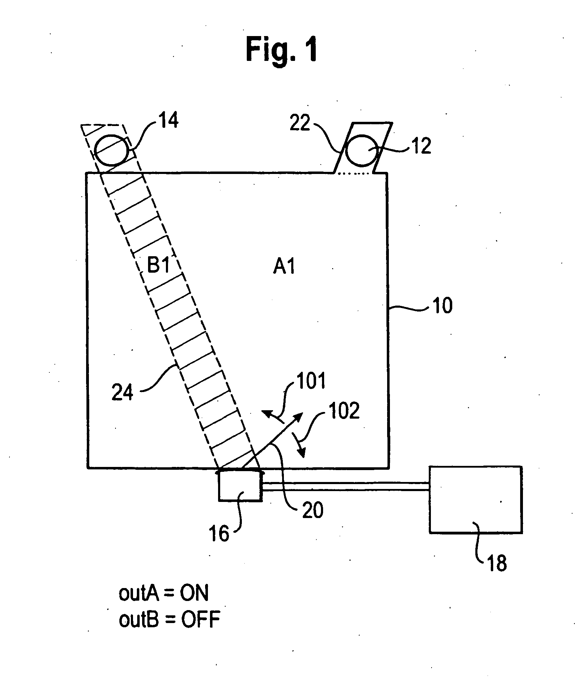

Fig. 1 zeigt schematisch die Anordnung eines Scansystems zur Durchführung eines erfindungsgemäßen Verfahrens. Bezugsziffer 16 bezeichnet ein Laserscansystem, das mit einer Auswerte- und Steuereinheit 18 verbunden ist, die zum Beispiel einen Mikroprozessor und ein Speichereinheit umfasst. Das Laserscansystem 16 kann erste und zweite Ausgangssignale outA, outB an die Auswerte- und Steuereinheit geben. In einer Speichereinheit, die zum Beispiel in der Auswerte- und Steuereinheit 18 vorgesehen sein kann, ist die Geometrie von Scanfeldern A1, B1, A2, B2 abgelegt, die weiter unten näher beschrieben werden.

Bezugsziffer 10 bezeichnet ein im vorliegenden Beispiel rechteckförmiges Schutzfeld, das mit dem erfindungsgemäßen Laserscansystem auf die Anwesenheit von unzulässigen oder störenden Objekten überwacht werden soll.

In an sich bekannter Weise wird dazu von dem Laserscansystem 16 ein Laserstrahl als Scanlichtstrahl 20 in das Schutzfeld geschickt, der mit Hilfe einer in dem Laserscansystem 16 vorgesehenen schwenkbaren Lichtablenkeinheit in den Schwenkrichtungen 101 bzw. 102 verschwenkt wird, um das Schutzfeld 10 zu überstreichen. Von einem Objekt reflektiertes Licht wird zurück zum Laserscansystem 16 reflektiert und dort detektiert. Aus der Stellung der Lichtablenkeinheit kann auf den Winkel geschlossen werden, unter dem sich das reflektierende Objekt relativ zum Laserscansystem 16 befindet. Aus der Laufzeit eines Lichtimpulses vom Laserscansystem 16 bis zu dem reflektierenden Objekt und zurück kann mit Hilfe der Lichtgeschwindigkeit auf die Entfernung des Objektes von dem Laserscansystem 16 geschlossen werden.

Das verwendete Licht kann im sichtbaren, aber auch in anderen Spektralbereichen gewählt sein, zum Beispiel im infraroten oder ultravioletten Spektralbereich. Vorteilhafterweise wird Laserlicht verwendet.

Ein Konturtestobjekt 12 befindet sich außerhalb des zu überwachenden Schutzfeldes. Dennoch befindet es sich im Erfassungsbereich des Laserscansystems 16 und definiert einen Winkelbereich, in dem ein Signal erwartet wird. Bei vorliegender Funktionsfähigkeit des Systems reflektiert das Konturtestobjekt 12 Licht, das vom Laserscansystem 16 ausgesandt wird, zurück zum Laserscansystem 16 und erzeugt dort ein entsprechendes Empfangssignal.

Ein weiteres Testobjekt ist vorgesehen, das im Folgenden als Feldtestobjekt 14 bezeichnet wird und bei der gezeigten Ausführungsform nicht mit dem Konturtestobjekt 12 identisch ist.

Die außerhalb des Schutzfeldes 10 befindlichen Testobjekte 12, 14 werden mit einer Reflektivität ausgewählt, die in etwa einem natürlichen Objekt entspricht. Die Form der Testobjekte ist nicht festgelegt und kann auch durch Konturen oder ähnliches gebildet sein.

Fig. 1 zeigt eine erste Prüfsequenz. Ein erster Feldsatz umfasst Scanfelder A 1 und B 1. Das erste Scanfeld A 1 umfasst das gesamte Schutzfeld 10 und zumindest einen Scanfeldfortsatz 22, in dem sich das außerhalb des Schutzfeldes 10 gelegene Konturtestobjekt 12 befindet.

Das zweite Scanfeld B 1 des ersten Feldsatzes umfasst zumindest den in Fig. 1 schraffiert dargestellten Bereich 24, der quasi einen von der Laserscaneinrichtung 16 ausgehenden Korridor definiert und das Feldtestobjekt 14 umfasst.

Der erste Feldsatz ist so definiert, dass ein positives erstes Ausgangssignal (outA = ON) erzeugt wird, wenn das Konturtestobjekt 12 an der erwarteten Position detektiert wird und ansonsten im Scanfeld A1 kein Objekt vorhanden ist. Die Detektion des Konturtestobjektes 12 ist eine notwendige Voraussetzung für ein positives erstes Ausgangssignal outA.

Das zweite Ausgangssignal wird auf negativ gesetzt (outB = OFF), wenn das Feldtestobjekt 14 detektiert wird.

In diesem unterhalb der Figur angegebenen Zustand ist für die Überwachung des Schutzfeldes 10 also das Signal des ersten Ausgangssignals relevant.

Allgemein kann ein Ausgangssignal "ON" zum Beispiel dadurch realisiert sein, dass der zugehörige Ausgang bzw. Ausgangskanal des Laserscansystems aktiv ist, während ein Ausgangssignal "OFF" dadurch realisiert ist, dass der zugehörige Ausgang bzw. Ausgangskanal des Laserscansystems deaktiviert ist. Damit ist es zum Beispiel auf einfache Weise möglich, das am jeweils aktiven Ausgang anliegende Signal als Sensorsignal zu verwenden.

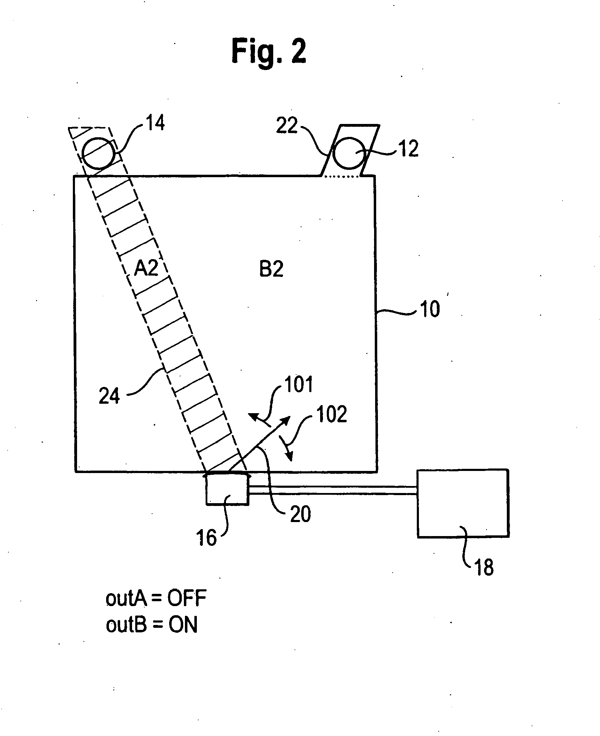

Fig. 2 zeigt dieselbe Ausführungsform bei der Durchführung einer zweiten Prüfsequenz. Jetzt ist von der Steuer- und Auswerteeinheit 18 auf den zweiten Feldsatz umgeschaltet worden. Im zweiten Feldsatz ist das erste Scanfeld A2 derart ausgewählt, dass es zumindest den Winkelbereich 24 umfasst, der das Feldtestobjekt 14 umfasst. Der zweite Scanbereich B2 des zweiten Feldsatzes umfasst das gesamte Schutzfeld 10 und zumindest denjenigen Scanfeldfortsatz 22 außerhalb des Schutzfeldes 10, der das Konturtestobjekt 12 umfasst.

Während der zweiten Prüfsequenz wird ein positives zweites Ausgangssignal (outB = ON) erzeugt, wenn im zweiten Scanfeld B2 an der erwarteten Position das Konturtestobjekt 12 detektiert wird. Für ein positives zweites Ausgangssignal outB ist dies die notwenige Bedingung.

Gleichzeitig wird ein negatives erstes Ausgangssignal (outA = OFF) erzeugt, wenn sich das Feldtestobjekt 14 im ersten Scanbereich A2 des zweiten Feldsatzes befindet. In diesem unterhalb der Figur angegebenen Zustand ist also das Signal des zweiten Ausgangssignals für die Überwachung des Schutzfeldes 10 relevant.

Die beschriebenen Betriebszustände stellen sich während des Betriebes des Überwachungssensors wie folgt ein:

Zunächst wird die erste Prüfsequenz gemäß der Einstellung der Fig. 1 mit dem dort gezeigten ersten Feldsatz durchgeführt. Das Schutzfeld 10 wird durch die Laserscaneinrichtung 16 abgescannt und ein erstes Ausgangssignal outA erzeugt. Befindet sich im Schutzfeld 10 kein unzulässiges Objekt und wird an der erwarteten Stelle das Konturtestobjekt 12 detektiert, so wird das erste Ausgangssignal outA auf ON gesetzt. Während des Scanvorgangs wird in dem zweiten Scanbereich B 1 des ersten Feldsatzes das Feldtestobjekt 14 detektiert und somit das zweite Ausgangssignal outB auf OFF gesetzt.

Eine entsprechende Ausgabe des Laserscansystems 16 wird zum Beispiel nach zehn derartigen Scans erzeugt, um eine Mittelung zum Ausgleich von kurzzeitigen Störeinflüssen zu ermöglichen.

Wird während dieser Scans das Konturtestobjekt 12 nicht an der erwarteten Stelle des Scanbereiches A1 detektiert, so wird das erste Ausgangssignal outA auf OFF gesetzt. Wird andererseits während dieses Betriebszustandes im zweiten Scanbereich B 1 des ersten Feldsatzes kein Objekt detektiert, so ist outB auf ON gesetzt.

Bei korrekter Funktionsfähigkeit ist daher outA auf ON und outB auf OFF gesetzt. Dieser Zustand wird für den Überwachungsbetrieb zunächst beibehalten. Der Ausgang des ersten Ausgangssignals ist aktiv und wird bis zum nächsten Umschalten des Feldsatzes als Sensorsignalausgang verwendet.

Zum Beispiel nach 5 Sekunden wird durch die Auswerte- und Steuereinheit 18 auf einen zweiten Feldsatz umgestellt, wobei diese Konfiguration in Fig. 2 gezeigt ist. Die Funktion der ersten und zweiten Ausgangssignale ist dabei vertauscht. Insbesondere ist hier der erste Scanbereich A2 des zweiten Feldsatzes derart definiert, dass er den Korridor 24 zwischen der Laserscaneinrichtung 16 und dem Feldtestobjekt 14 umfasst. Der zweite Scanbereich B2 des zweiten Feldsatzes ist derart definiert, dass er das gesamte Schutzfeld 10 zusammen mit dem Scanfeldfortsatz 22 umfasst, der das Konturtestobjekt 12 enthält.

In diesem Betriebszustand wird das erste Ausgangssignal outA auf OFF gestellt, wenn das Feldtestobjekt 14 sich im ersten Scanbereich A2 des zweiten Feldsatzes befindet. Das zweite Ausgangssignal outB wird nur dann auf ON gestellt, wenn sich im zweiten Scanbereich B2 das Konturtestobjekt 12 befindet. Mit gegenüber der ersten Prüfsequenz vertauschten Rollen der Ausgangssignale outA und outB wird so die zweite Prüfsequenz durchgeführt. Bei freiem Schutzfeld 10 wird dabei ein positives zweites Ausgangssignal outB erzeugt, wenn zum einen das Konturtestobjekt 12 detektiert wird und zum anderen das Schutzfeld 10 frei ist. Der Ausgang des zweiten Ausgangssignals ist aktiv und dient bis zum nächsten Umschalten des Feldsatzes als Sensorsignalausgang.

Nach weiteren zum Beispiel 5 Sekunden kann wieder auf den ersten Feldsatz zurückgeschaltet werden.

Die korrekte Funktionsfähigkeit wird nur dann angenommen, wenn nach dem Wechsel auf die erste Prüfsequenz (zumindest nach dem Abwarten einer tolerierbaren Schaltspielzeit von zum Beispiel einigen einhundert Millisekunden, zum Beispiel 400 Millisekunden) das erste Ausgangssignal outA auf ON steht und das zweite Ausgangssignal outB auf OFF, bzw. wenn nach dem Wechsel auf die zweite Prüfsequenz (zumindest nach dem Abwarten einer tolerierbaren Schaltspielzeit) das erste Ausgangssignal outA auf OFF steht und das zweite Ausgangssignal outB auf ON. Ansonsten wird ein Warnsignal oder ein Stoppsignal für die Vorrichtung erzeugt, deren Schutzfeld mit dem Überwachungssystem überwacht wird.

Wird zusätzlich durch die Auswerte- und Steuereinheit 18 überwacht, wie lange es dauert, bis sich das Umschalten von einem auf den anderen Feldsatz in den Ausgangssignalen widerspiegelt, kann die Antwortzeit für das Schaltspiel der Ausgänge bestimmt werden. Dazu wird zum Beispiel die Antwortzeit für das Schaltspiel der Ausgänge nach einer Feldsatzumschaltung über ein sicheres Zeittor, zum Beispiel 400 Millisekunden, überwacht. Überschreitet die Antwortzeit zum Beispiel diesen Schwellwert, wird ein Fehler angenommen und das Warn- und/oder Stoppsignal generiert.

Bei der beschriebenen Arbeitsweise gemäß den Betriebszuständen der Fig. 1 und 2 werden die Ausgangssignale outA bzw. outB aus den Rohdaten zumindest eines Scans ermittelt. Alternativ kann das erste Ausgangssignal outA in einem ersten Scan ermittelt werden und das zweite Ausgangssignal outB in einem zweiten möglichst direkt darauf folgenden zweiten Scan.

Grundsätzlich ist es auch möglich, dass ein Testobjekt während eines ersten Betriebszustandes als Konturtestobjekt und während eines anderen Betriebszustandes als Feldtestobjekt dient. So können zum Beispiel beim Wechsel des Betriebszustandes der Fig. 1 zum Betriebszustand der Fig. 2 die Testobjekte 12, 14 ihre Rollen tauschen.

Andere Ausführungsformen verwenden nicht nur zwei Testobjekte, sondern mehrere Testobjekte, deren Reflexionen in beschriebener Weise ausgewertet werden.

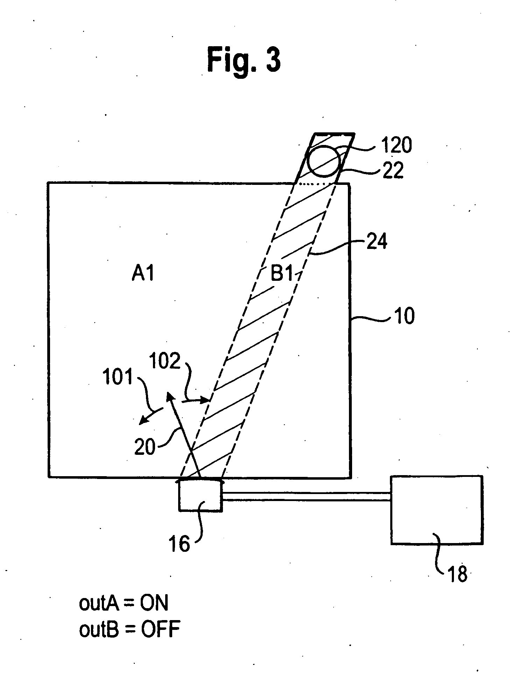

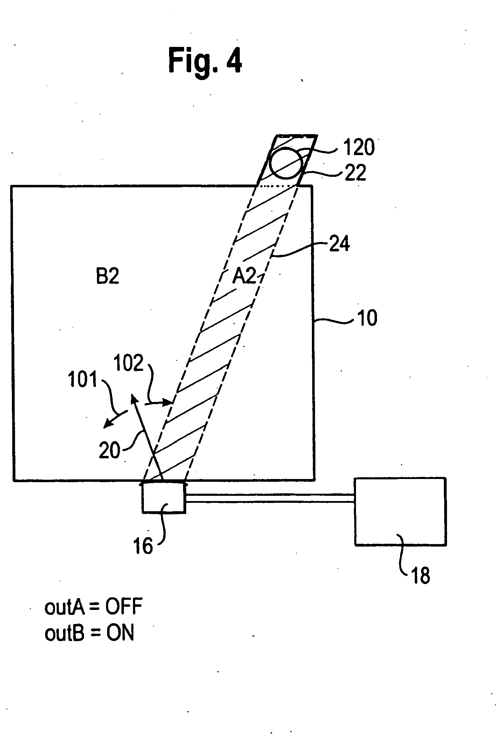

Die Fig. 3 und 4 zeigen eine andere Ausgestaltung, bei der nur ein Testobjekt 120 sowohl als Konturtestobjekt als auch als Feldtestobjekt dient. Das Funktionsprinzip entspricht der Ausgestaltung der Fig. 1 und 2.

Während einer ersten Prüfsequenz wird ein erster Feldsatz verwendet, bei dem das erste Scanfeld A1 das Schutzfeld 10 und den Fortsatz 22 umfasst, in dem sich das Testobjekt 120 befindet. Das Scanfeld B 1 umfasst den schraffiert dargestellten Korridor 24, der das Testobjekt 120 umfasst. Ist das Schutzfeld 10 frei und wird das Testobjekt 120 im Scanbereich A1 detektiert, so ist das erste Ausgangssignal outA = ON. Das Testobjekt 120 wird auch im zweiten Scanbereich B 1 des ersten Feldsatzes detektiert, wodurch das zweite Ausgangssignal outB auf OFF gesetzt wird.

Wie auch für die Ausgestaltung der Fig. 1 und 2 beschrieben, wird zum Beispiel nach 5 Sekunden auf einen zweiten Feldsatz umgeschaltet, der in Fig. 4 dargestellt ist. Hier umfasst der erste Scanbereich A2 den Korridor 24, der das Testobjekt 120 als Feldtestobjekt umfasst. Wird hier ein Objekt detektiert, so wird das erste Ausgangssignal outA auf OFF gesetzt.

Der zweite Scanbereich B2 des zweiten Feldsatzes umfasst das gesamte Schutzfeld 10 und den Fortsatz 22, der das Testobjekt 120 enthält. Wird das Testobjekt 120 am erwarteten Ort detektiert, so wird das zweite Ausgangssignal outB auf ON gesetzt.

Die Auswertung und Weiterverarbeitung der Signale erfolgt wie für die Ausgestaltung der Fig. 1 und 2 beschrieben.

Die beschriebenen Ausgestaltungen beruhen auf der Verwendung von zwei Feldsätzen, wobei in den einzelnen Feldsätzen die Ausgangssignale outA, outB unterschiedlich bewertet werden. Je nach Anforderungen können auch mehrere Feldsätze vorgesehen sein. Ebenso können auch mehr als zwei Scanfelder je Feldsatz vorgesehen sein.

Die Testobjekte 12, 14, 120 wurden nur beispielhaft an den dargestellten Positionen gezeigt. Selbstverständlich können sie sich auch an anderen Stellen außerhalb des Schutzfeldes 10 befinden, zum Beispiel seitlich davon. Auch die rechteckige Darstellung des Schutzfeldes 10 an sich ist nur schematischer Natur und kann auch andere, insbesondere unregelmäßige Formen umfassen. Befinden sich in dem Schutzfeld Gegenstände, deren Anwesenheit während des Betriebes zulässig ist (zum Beispiel Haltevorrichtungen für Werkstücke etc.), so können diese dem System ebenso wie gegebenenfalls die Schutzfeldform zum Beispiel in einem Teach-in-Prozess eingelernt werden.

Die Umschaltung zwischen den Feldsätzen, die Auswertung und Erzeugung entsprechender Warn- und/oder Steuersignale kann von der Auswerte- und Steuereinheit automatisch vorgenommen werden.

Mögliche Fehlerszenarien werden bei den beschriebenen Ausführungsformen wie folgt erkannt:

Ist zum Beispiel die Frontscheibe des Laserscansystems verschmutzt oder sein Detektionsvermögen auf andere Weise vermindert, so wird dies dadurch erkannt, dass die Auswerte- und Steuereinheit 18 kein Signal empfängt, das dem Konturtestobjekt 12 entspricht bzw. keines der Ausgangssignale auf ON gestellt ist.

Bei defektem Laserscansystem 16 reagiert das System nicht auf die Umschaltung von einem Feldsatz zu einem anderen Feldsatz. Es wird ein Fehler erkannt, da sich das Signal nicht verändert.

Ebenso verändert sich das Signal nicht, wenn es an einer Stelle des Systems zu einem Drahtbruch oder zu einem Kurzschluss kommt.

Ein Kurzschluss zwischen den Ausgängen des Laserscansystems 16 äußert sich zum Beispiel in identischen Ausgangssignalen outA, outB, von denen bei korrekter Funktionsfähigkeit eines auf OFF und eines auf ON stehen sollte.

Reagiert der Steuereingang des Laserscansystems 16 nicht, so wird überhaupt keine Feldsatzumschaltung ausgelöst und das System erkennt am Fehlen des Signalwechsels einen Fehler des Systems.

Fehlt zum Beispiel das Konturtestobjekt 12, so wird während der ersten Prüfsequenz abweichend von dem Normalzustand das erste Ausgangssignal outA nicht auf ON stehen und während der zweiten Prüfsequenz das zweite Ausgangssignal outB nicht auf ON stehen. Das System erkennt einen Fehler und kann das entsprechende Warn- oder Stoppsignal erzeugen.

Fehlt zum Beispiel das Feldtestobjekt 14, so steht während der ersten Prüfsequenz das zweite Ausgangssignal outB nicht auf OFF und während der zweiten Prüfsequenz das erste Ausgangssignal outA nicht auf OFF. Auch hier erkennt das System eine Abweichung von der Norm und kann ein entsprechendes Warn- oder Stoppsignal erzeugen.

Ist das System, insbesondere das Laserscansystem 16, zum Beispiel durch eine Verschwenkung dejustiert, so werden die Testantworten insbesondere bei der Feststellung der Lage des Konturtestobjektes 12 zeitlich verschoben oder gar nicht vorhanden sein, so dass auf diese Weise eine Fehlfunktion festgestellt werden kann.

### Bezugszeichenliste

- 10: zu überwachendes Schutzfeld
- 12: Konturtestobjekt
- 14: Feldtestobjekt
- 16: Laserscanner
- 18: Auswerte- und Steuereinheit
- 20: Scanlichtstrahl
- 22: Scanfeldfortsatz
- 24: Scanfeldkorridor
- 101, 102: Schwenkrichtung
- 120: Testobjekt

- A1: erstes Scanfeld des ersten Feldsatzes
- B1: zweites Scanfeld des ersten Feldsatzes
- A2: erstes Scanfeld des zweiten Feldsatzes
- B2: zweites Scanfeld des zweiten Feldsatzes

- outA: erstes Ausgangssignal
- outB: zweites Ausgangssignal

## Patentansprüche

1. Prüfverfahren zur Prüfung der Funktionsfähigkeit eines Überwachungssensors zur Überwachung eines Schutzfeldes, der ein wenigstens zweidimensionales zu überwachendes Schutzfeld (10) mit wenigstens einem Scanner (16) abtastet, wobei Licht einer Lichtquelle, vorzugsweise eines Lasers, über eine bewegliche, vorzugsweise schwenkbare, Lichtablenkeinheit in ein zu überwachendes Schutzfeld (10) gesendet wird und Licht, das gegebenenfalls von einem im Schutzfeld (10) vorhandenen Objekt reflektiert oder remittiert wird, mit einem Empfänger detektiert wird, wobei
- wenigstens ein Konturtestobjekt (12) außerhalb des zu überwachenden Schutzfeldes (10) aber im Erfassungsbereich des Sensors (16) vorgesehen wird, wobei die Lage des Konturtestobjektes (12) relativ zum Scanner (16) zumindest in einer räumlichen Dimension, vorzugsweise jedoch vollständig, bekannt ist,
- wenigstens ein Feldtestobjekt (14) außerhalb des zu überwachenden Schutzfeldes (10) aber im Erfassungsbereich des Sensors (16) vorgesehen ist,
- ein erster Feldssatz mit wenigstens zwei Scanfeldern (A1, B1) definiert wird, wobei das erste Scanfeld (A1) des ersten Feldsatzes das zu überwachende Schutzfeld (10) und den Bereich wenigstens eines Konturtestobjektes (12) umfasst und das zweite Scanfeld (B1) des ersten Feldsatzes wenigstens den Bereich eines Feldtestobjektes (14) umfasst,
- in einer ersten Prüfsequenz das zu überwachende Schutzfeld und die Bereiche des wenigstens einen Konturtestobjektes (12) und des wenigstens einen Feldtestobjektes (14) wenigstens einmal unter Verwendung des ersten Feldsatzes abgetastet werden, wobei ein positives erstes Ausgangssignal (outA) nur dann erzeugt wird, wenn ein Konturtestobjekt (12) im ersten Scanfeld (A1) des ersten Feldsatzes in der erwarteten Lage detektiert wird, und ein negatives zweites Ausgangssignal (outB) erzeugt wird, wenn ein Feldtestobjekt (14) im zweiten Scanfeld (B1) des ersten Feldsatzes detektiert wird, **dadurch gekennzeichnet, daß**
- ein zweiter Feldsatz mit wenigstens zwei Scanfeldern (A2, B2) definiert wird, wobei das erste Scanfeld (A2) des zweiten Feldsatzes wenigstens den Bereich eines Feldtestobjektes (14) umfasst und das zweite Scanfeld (B2) des zweiten Feldsatzes das zu überwachende Schutzfeld (10) und den Bereich des wenigstens einen Konturtestobjektes (12) umfasst,
- in einer zweiten Prüfsequenz das zu überwachende Schutzfeld (10) und die Bereiche des wenigstens einen Konturtestobjektes (12) und des wenigstens einen Feldtestobjektes (14) unter Verwendung des zweiten Feldsatzes wenigstens einmal abgetastet werden und ein positives zweites Ausgangssignal (outB) nur dann erzeugt wird, wenn ein Konturtestobjekt (12) im zweiten Scanfeld (B2) des zweiten Feldsatzes in der erwarteten Lage detektiert wird, und ein negatives erstes Ausgangssignal (outA) erzeugt wird, wenn ein Feldtestobjekt (14) im ersten Scanfeld (A2) des zweiten Feldsatzes detektiert wird, und
- die korrekte Funktionsfähigkeit des Sensors nur dann angenommen wird, wenn nach einem Wechsel auf die erste Prüfsequenz ein positives erstes Ausgangssignal (outA) und ein negatives zweites Ausgangssignal (outB) festgestellt werden bzw. nach einem Wechsel auf die zweite Prüfsequenz ein positives zweites Ausgangssignal (outB) und ein negatives erstes Ausgangssignal (outA) festgestellt werden.

2. Prüfverfahren nach Anspruch 1, **dadurch gekennzeichnet, dass** ein positives Ausgangssignal dadurch realisiert wird, dass ein entsprechender Signalausgang bzw. Signalausgangskanal aktiv ist, und ein negatives Ausgangssignal **dadurch** realisiert wird, dass ein entsprechender Signalausgang bzw. Signalausgangskanal deaktiviert ist.

3. Prüfverfahren nach einem der vorhergehenden Ansprüche, **dadurch gekennzeichnet, dass** mehrfach zwischen den Feldsätzen umgeschaltet wird.

4. Prüfverfahren nach einem der vorhergehenden Ansprüche, **dadurch gekennzeichnet, dass** der Zeitraum zwischen den Wechseln von einem auf einen anderen Feldsatz 1 bis 10 Sekunden, vorzugsweise 3 bis 7 Sekunden und ganz besonders bevorzugt etwa 5 Sekunden, beträgt.

5. Prüfverfahren nach einem der vorhergehenden Ansprüche, **dadurch gekennzeichnet, dass** der Zeitraum zwischen den Wechseln von einem auf einen anderen Feldsatz einstellbar ist.

6. Prüfverfahren nach einem der vorhergehenden Ansprüche, **dadurch gekennzeichnet, dass** die Ausgangsignale (outA, outB) einer Prüfsequenz jeweils aus den Scannersignalen desselben Scans des zu überwachenden Schutzfeldes (10) bestimmt werden.

7. Prüfverfahren nach einem der Ansprüche 1 bis 5, **dadurch gekennzeichnet, dass** ein erstes Ausgangssignal einer Prüfsequenz in einem ersten Scan des zu überwachenden Schutzfeldes (10) und das zweite Ausgangssignal (outB) der Prüfsequenz in einem zweiten Scan des zu überwachenden Schutzfeldes (10) ermittelt werden.

8. Prüfverfahren nach einem der vorhergehenden Ansprüche, **dadurch gekennzeichnet, dass** als Konturtestobjekt und als Feldtestobjekt ein und dasselbe Testobjekt (120) verwendet werden.

9. Prüfverfahren nach einem der vorhergehenden Ansprüche, **dadurch gekennzeichnet, dass** jeweils eine Vielzahl von aufeinander folgenden Scans ohne Wechsel des Feldsatzes durchgeführt wird, bevor aus den Ausgangssignalen ein Gesamtsignal erzeugt wird.

10. Prüfverfahren nach einem der vorhergehenden Ansprüche, **dadurch gekennzeichnet, dass** der Zeitraum überwacht wird, bis sich der Wechsel von einem Feldsatz zu einem anderen Feldsatz in den Ausgangssignalen (outA, outB) widerspiegelt und die korrekte Funktionsfähigkeit des Überwachungssensors nur dann angenommen wird, wenn dieser Zeitraum kleiner als ein vorgegebener Schwellwert ist.

11. Überwachungsverfahren zur Überwachung eines Schutzfeldes mit einem Überwachungssensor, der ein wenigstens zweidimensionales zu überwachendes Schutzfeld (10) mit wenigstens einem Scanner (16) abgetastet, wobei Licht einer Lichtquelle, vorzugsweise eines Lasers, über eine bewegliche, vorzugsweise schwenkbare, Lichtablenkeinheit in ein zu überwachendes Schutzfeld (10) gesendet wird und Licht, das gegebenenfalls von einem im Schutzfeld (10) vorhandenen Objekt reflektiert oder remittiert wird, mit einem Empfänger detektiert wird,
**dadurch gekennzeichnet, dass**
- zur Prüfung der Funktionsfähigkeit des Sensors das Prüfverfahren eines der Ansprüche 1 bis 10 verwendet wird und
- während einer ersten Prüfsequenz und des darauf folgenden Zeitraumes bis zum Wechsel auf einen anderen Feldsatz das erste Ausgangssignal (outA) als Sensorausgangssignal verwendet wird und
- während einer zweiten Prüfsequenz und des darauf folgenden Zeitraumes bis zum Wechsel auf einen anderen Feldsatz das zweite Ausgangssignal (outB) als Sensorausgangssignal verwendet wird.

12. Überwachungsverfahren nach Anspruch 11, **dadurch gekennzeichnet, dass** der Zeitraum zwischen den Wechseln von einem auf einen anderen Feldsatz 1 bis 10 Sekunden, vorzugsweise 3 bis 7 Sekunden und ganz besonders bevorzugt etwa 5 Sekunden, beträgt.

13. Überwachungsverfahren nach Anspruch 11, **dadurch gekennzeichnet, dass** mehrere direkt aufeinander folgende unterschiedliche Prüfsequenzen zur Bildung eines Überwachungszeitraumes durchgeführt werden.

14. Überwachungssensor zur Überwachung eines wenigstens zweidimensionalen Schutzfeldes (10), ausgebildet zur Durchführung eines Prüfverfahrens nach einem der Ansprüche 1 bis 10 und/oder eines Überwachungsverfahrens nach einem der Ansprüche 11 bis 13, der folgendes umfasst:
- wenigstens einen Scanner (16) mit einer Lichtquelle, vorzugsweise einem Laser, einer bewegbaren, vorzugsweise schwenkbaren, Lichtablenkeinheit zur Ablenkung des Lichtes der Lichtquelle in ein zu überwachendes Schutzfeld (10) und einem Empfänger zur Detektion von Licht, das gegebenenfalls von einem im Schutzfeld (10) vorhandenen Objekt reflektiert oder remittiert wird,
- eine Speichereinheit, in der die Scanfelder (A1, B1, A2, B2) wenigstens zweier Feldsätze abgespeichert sind,
- wenigstens ein Testobjekt (12, 14, 120) außerhalb des zu überwachenden Schutzfeldes (10) und
- eine Auswerte- und Steuereinheit (18), die ausgestaltet ist, den Scanner (16) derart anzusteuern, dass er das zu überwachende Schutzfeld (10) und den Bereich des wenigstens einen Testobjektes während einer ersten Prüfsequenz gemäß einem ersten Feldsatz und während einer zweiten Prüfsequenz gemäß einem zweiten Feldsatz abscannt.

15. Überwachungssensor nach Anspruch 14, **gekennzeichnet durch** wenigstens zwei Testobjekte (12, 14), wobei von wenigstens einem Testobjekt, das als Konturtestobjekt (12) dient, die Lage bekannt ist, und ein anderes Testobjekt als Feldtestobjekt (14) dient.

## Claims

1. A test method for the testing of the operability of a monitoring sensor for the monitoring of a protective field which scans an at least two dimensional protective field (10) to be monitored using at least one scanner (16), with light of a light source, preferably of a laser, being transmitted via a movable, preferably pivotable, light deflection unit into a protective field (10) to be monitored and with light which is, where applicable, reflected or remitted by an object present in the protective field (10) being detected by a receiver, wherein
- at least one contour test object (12) is provided outside the protective field (10) to be monitored, but in the detection region of the sensor (16), with the position of the contour test object (12) relative to the scanner (16) being known in at least one spatial dimension, but preferably completely;
- at least one field test object (14) is provided outside the protective field (10) to be monitored, but in the detection region of the sensor (16);
- a first field set having at least two scan fields (A1, B1) is defined, with the first scan field (A1) of the first field set containing the protective field (10) to be monitored and the region of at least one contour test object (12) and with the second scan field (B1) of the first field set containing at least the region of one field test object (14);
- the protective field to be monitored and the regions of the at least one contour test object (12) and of the at least one field test object (14) are scanned at least once while using the first field set in a first test sequence, with a positive first output signal (outA) only being generated when a contour test object (12) is detected in the expected position in the first scan field (A1) of the first field set and with a negative second output signal (outB) being generated when a field test object (14) is detected in the second scan field (B1) of the first field set,
**characterized in that**
- a second field set having at least two scan fields (A2, B2) is defined, with the first scan field (A2) of the second field set containing at least the region of a field test object (14) and the second scan field (B2) of the second field set containing the protective field (10) to be monitored and the region of the at least one contour test object (12);
- the protective field (10) to be monitored and the regions of the at least one contour test objects (12) and of the at least one field test object (14) are scanned at least once while using the second field set in a second test sequence and a positive second output signal (outB) is only generated when a contour test object (12) is detected in the expected position in the second scan field (B2) of the second field set and a negative first output signal (outA) is generated when a field test object (14) is detected in the first scan field (A2) of the second field set; and
- the correct operability of the sensor is only assumed if, after a change to the first test sequence, a positive first output signal (outA) and a negative second output signal (outB) are found or, after a change to the second test sequence, a positive second output signal (outB) and a negative first output signal (outA) are found.

2. A test method in accordance with claim 1, **characterized in that** a positive output signal is realized **in that** a corresponding signal output or signal output channel is active; and **in that** a negative output signal is realized **in that** a corresponding signal output or signal output channel is deactivated.

3. A test method in accordance with any one of the preceding claims, **characterized in that** a switchover between the field sets is made several times.

4. A test method in accordance with any one of the preceding claims, **characterized in that** the time period between the changes from one field set to another field set amounts to 1 to 10 seconds, preferably 3 to 7 seconds, and very particularly preferably approximately 5 seconds.

5. A test method in accordance with any one of the preceding claims, **characterized in that** the time period between the changes from one field set to another field set can be set.

6. A test method in accordance with any one of the preceding claims, **characterized in that** the output signals (outA, outB) of a test sequence are each determined from the scanner signals of the same scan of the protective field (10) to be monitored.

7. A test method in accordance with any one of the claims 1 to 5, **characterized in that** a first output signal of a test sequence is determined in a first scan of the protective field (10) to be monitored and the second output signal (outB) of the test sequence is determined in a second scan of the protective field (10) to be monitored.

8. A test method in accordance with any one of the preceding claims, **characterized in that** one and the same test object (120) is used as the contour test object and as the field test object.

9. A test method in accordance with any one of the preceding claims, **characterized in that** in each case a plurality of sequential scans are carried out without changing the field set before a total signal is generated from the output signals.

10. A test method in accordance with any one of the preceding claims, **characterized in that** the time period is monitored until the change from one field set to another field set is reflected in the output signals (outA, outB) and the correct operability of the monitoring sensor is only assumed when this time period is less than a predetermined threshold value.

11. A monitoring method for the monitoring of a protective field using a monitoring sensor which scans an at least two dimensional protective field (10) using at least one scanner (16), with light of a light source, preferably of a laser, being transmitted via a movable, preferably pivotable, light deflection unit into a protective field (10) to be monitored and with light which is, where applicable, reflected or remitted by an object present in the protective field (10) being detected by a receiver,
**characterized in that**
- the test method of one of the claims 1 to 10 is used for the testing of the operability of the sensor; and
- the first output signal (outA) is used as the sensor output signal during a first test sequence and the following time period up to the change to another field set; and
- the second output signal (outB) is used as the sensor output signal during a second test sequence and the following time period up to the change to another field set.

12. A monitoring method in accordance claim 11, **characterized in that** the time period between the changes from one field set to another field set amounts to 1 to 10 seconds, preferably 3 to 7 seconds, and very particularly preferably approximately 5 seconds.

13. A monitoring method in accordance with claim 11, **characterized in that** a plurality of directly sequential different test sequences are carried out to form a monitoring time period.

14. A monitoring sensor for the monitoring of an at least two dimensional protective field (10) made for the carrying out of a test method in accordance with any one of the claims 1 to 10 and/or of a monitoring method in accordance with any one of the claims 11 to 13, comprising the following:
- at least one scanner (16) with a light source, preferably a laser, a movable, preferably pivotable, light deflection unit for the deflection of the light of the light source into a protective field (10) to be monitored, and a receiver for the detection of light which is, where applicable, reflected or remitted by an object present in the protective field (10);
- a memory unit in which the scan fields (A1, B1, A2, B2) of at least two field sets are stored;
-- at least one test object (12, 14, 120) outside the protective field (10) to be monitored; and
- an evaluation and control unit (18) configured so as to control the scanner (16) such that it scans the protective field (10) to be monitored and the region of the at least one test object during a first test sequence in accordance with a first field set and during a second test sequence in accordance with a second field set.

15. A monitoring sensor in accordance with claim 14, **characterized by** at least two test objects (12, 14), with the position of at least one test object, which serves as a contour test object (12), being known and with another test object serving as a field test object (14).

## Revendications

1. Procédé de contrôle pour contrôler la capacité fonctionnelle d'un détecteur de surveillance destiné à surveiller un champ à protéger, qui y balaye un champ à protéger (10) au moins bidimensionnel qu'il s'agit de surveiller avec au moins un scanneur (16), dans lequel une lumière provenant d'une source de lumière, de préférence un laser, est émise via une unité de déflexion de lumière mobile, de préférence pivotante, dans un champ à protéger (10) qu'il s'agit de surveiller, et la lumière qui est réfléchie ou renvoyée éventuellement par un objet présent dans le champ à protéger (10) est détectée avec un récepteur, dans lequel
- au moins un objet formant test de contour (12) est prévu à l'extérieur du champ à protéger (10) mais dans la zone de détection du détecteur (16), la position de l'objet formant test de contour (12) par rapport au scanneur (16) est connue, au moins dans une dimension dans l'espace, mais de préférence entièrement,
- au moins un objet formant test de champ (14) est prévu à l'extérieur du champ à protéger (10) mais dans la zone de détection du détecteur (16),
- un premier groupe de champs comprenant au moins deux champs de balayage (A1, B1) est défini, dans lequel le premier champ de balayage (A1) du premier groupe de champs comprend le champ à protéger (10) et la zone d'au moins un objet formant test de contour (12) et le second champ de balayage (B1) du premier groupe de champs comprend au moins la zone d'un objet formant test de champ (14),
- dans une première séquence de contrôle, le champ à protéger qu'il s'agit de surveiller et les zones dudit au moins un objet formant test de contour (12) et dudit au moins un objet formant test de champ (14) sont balayés au moins une fois en utilisant le premier groupe de champs, et un premier signal de sortie positif (outA) n'est engendré que si un objet formant test de contours (12) est détecté dans la position attendue dans le premier champ de balayage (A1) du premier groupe de champs, et un second signal de sortie négatif (outB) est engendré si un objet formant test de champ (14) est détecté dans le second champ de balayage (B1) du premier groupe de champs,
**caractérisé en ce que**
- un second groupe de champs avec au moins deux champs de balayage (A2, B2) est défini, dans lequel le premier champ de balayage (A2) du second groupe de champs comprend au moins la zone d'un objet formant test de champ (14), et le second champ de balayage (B2) du second groupe de champs comprend le champ à protéger (10) qu'il s'agit de surveiller et la zone dudit au moins un objet formant test de contour (12),
- dans une seconde séquence de contrôle, le champ à protéger (10) qu'il s'agit de surveiller et les zones dudit au moins un objet formant test de contour (12) et dudit au moins un objet formant test de champ (14) sont balayés au moins une fois en utilisant le second groupe de champs, et un second signal de sortie positif (outB) n'est engendré que si un objet formant test de contour (12) est détecté dans la position attendue dans le second champ de balayage (B2) du second groupe de champs, et un premier signal de sortie négatif (outA) est engendré quand un objet formant test de champ (14) est détecté dans le premier champ de balayage (A 2) du second groupe de champs, et
- la capacité de fonctionnement correct du détecteur est considérée comme donnée uniquement lorsque, après un changement vers la première séquence de contrôle, on constate un premier signal de sortie positif (outA) et un second signal de sortie négatif (outB), ou bien, après un changement vers la seconde séquence de contrôle, on constate un second signal de sortie positif (outB) et un premier signal de sortie négatif (outA).

2. Procédé de contrôle selon la revendication 1, **caractérisé en ce qu'**un signal de sortie positif est réalisé du fait qu'une sortie de signal correspondante, ou un canal de sortie de signal correspondant est active/actif, et un signal de sortie négatif est réalisé du fait qu'une sortie de signal correspondante, ou un canal de sortie de signal correspondant est désactivée/désactivé.

3. Procédé de contrôle selon l'une des revendications précédentes, **caractérisé en ce que** l'on procède plusieurs fois à une inversion entre les groupes de champs.

4. Procédé de contrôle selon l'une des revendications précédentes, **caractérisé en ce que** l'intervalle temporel entre les changements d'un groupe de champs à un autre s'élève de 1 à 10 secondes, de préférence de 3 à 7 secondes, et de façon tout à fait préférée environ 5 secondes.

5. Procédé de contrôle selon l'une des revendications précédentes, **caractérisé en ce que** l'intervalle temporel entre les changements d'un groupe de champs à un autre est réglable.

6. Procédé de contrôle selon l'une des revendications précédentes, **caractérisé en ce que** les signaux de sortie (outA, outB) d'une séquence de contrôle sont déterminés respectivement à partir des signaux de balayage du même balayage du champ à protéger (10) qu'il s'agit de surveiller.

7. Procédé de contrôle selon l'une des revendications 1 à 5, **caractérisé en ce qu'**un premier signal de sortie (outA) d'une séquence de contrôle est déterminé dans un premier balayage du champ à protéger (10) qu'il s'agit de surveiller, et le second signal de sortie (outB) de la séquence de contrôle est déterminée dans un second balayage du champ à protéger (10) qu'il s'agit de surveiller.

8. Procédé de contrôle selon l'une des revendications précédentes, **caractérisé en ce que** l'on utilise à titre d'objet formant test de contour et à titre d'objet formant test de champ un seul et même objet formant test (120).

9. Procédé de contrôle selon l'une des revendications précédentes, **caractérisé en ce que** l'on exécute respectivement une pluralité de balayages mutuellement successifs sans changement du groupe de champs, avant de générer un signal d'ensemble à partir des signaux de sortie.

10. Procédé de contrôle selon l'une des revendications précédentes, **caractérisé en ce que** l'on surveille l'intervalle temporel jusqu'à ce que le changement d'un groupe de champs à un autre groupe de champs soit répercuté dans les signaux de sortie (outA, outB), et la capacité de fonctionnement correct du détecteur de surveillance n'est alors considérée comme donnée que lorsque cet intervalle temporel est plus petit qu'une valeur seuil prédéterminée.

11. Procédé de surveillance destiné à la surveillance d'un champ à protéger, avec un détecteur de surveillance qui balaye un champ à protéger (10) au moins bidimensionnel, qu'il s'agit de surveiller, avec au moins un scanneur, dans lequel la lumière d'une source de lumière, de préférence d'un laser, est émise via une unité de déflexion de lumière mobile, de préférence pivotante, dans un champ à protéger (10) qu'il s'agit de surveiller, et la lumière qui est réfléchie ou renvoyée éventuellement par un objet présent dans le champ à protéger (10) est détectée avec un récepteur,
**caractérisé en ce que**
- pour contrôler la capacité de fonctionnement du détecteur, on utilise le procédé de contrôle des revendications 1 à 10, et
- pendant une première séquence de contrôle et pendant l'intervalle temporel successif jusqu'au changement à un autre groupe de champs, on utilise le premier signal de sortie (outA) à titre de signal de sortie du détecteur, et
- pendant une seconde séquence de contrôle et pendant l'intervalle temporel successif jusqu'au changement à un autre groupe de champs, on utilise le second signal de sortie (outB) à titre de signal de sortie du détecteur.

12. Procédé de surveillance selon la revendication 11, **caractérisé en ce que** l'intervalle temporel entre le changement d'un groupe de champs à un autre est de 1 à 10 secondes, de préférence de 3 à 7 secondes, et de façon tout à fait préférée environ 5 secondes.

13. Procédé de surveillance selon la revendication 11, **caractérisé en ce que** l'on exécute plusieurs séquences de contrôle différentes qui se suivent directement pour former un intervalle temporel de surveillance.

14. Détecteur de surveillance pour surveiller au moins un champ à protéger bidimensionnel (10), réalisé pour la mise en oeuvre d'un procédé de contrôle selon l'une des revendications 1 à 10 et/ou d'un procédé de surveillance selon l'une des revendications 11 à 13, comprenant les éléments suivants :
- au moins un scanneur (16) avec une source de lumière, de préférence un laser, une unité de déflexion de lumière mobile, de préférence pivotante, pour défléchir la lumière de la source de lumière vers un champ à protéger (10) qu'il s'agit de surveiller, et un récepteur pour la détection de la lumière qui est réfléchie ou renvoyée le cas échéant par un objet présent dans le champ à protéger (10),
- une unité à mémoire dans laquelle les champs de balayage (A1, B1, A2, B2) d'au moins deux groupes de champs sont mémorisés,
- au moins un objet formant test (12, 14, 120) à l'extérieur du champ à protéger (10) qu'il s'agit de surveiller, et
- une unité d'évaluation et de commande (18), qui est conçue pour piloter le scanneur (16) de telle façon qu'il balaye le champ à protéger (10) qu'il s'agit de surveiller et la zone dudit au moins un objet formant test pendant une première séquence de contrôle selon un premier groupe de champs, et pendant une seconde séquence de contrôle selon un second groupe de champs.

15. Détecteur de surveillance selon la revendication 14, **caractérisé par** au moins deux objets formant test (12, 14), parmi lesquels la position d'au moins un objet formant test, qui sert d'objet formant test de contour (12), est connue, et un autre objet formant test sert d'objet formant test de champ (14).
